# EUROPEAN PATENT APPLICATION

(11) **EP 4 765 392 A1**
(43) Date of publication of application: **24.06.2026**
(21) Application number: 24933756.9
(22) Date of filing: 11.10.2024
(51) Int. Cl.: H01M 50/213, H01M 50/209

(54) **BATTERY AND ELECTRIC DEVICE**

(30) Priority: 03.04.2024 CN 202420684620 U
(71) Applicant: Contemporary Amperex Technology Co., Limited, Ningde, Fujian 352100 (CN)
(72) Inventor: HU, Lijun, Ningde, Fujian 352100 (CN); HUANG, Xiaoteng, Ningde, Fujian 352100 (CN); GUO, Haijian, Ningde, Fujian 352100 (CN)
(74) Representative: Ziebig Hengelhaupt Intellectual Property Attorneys Patentanwaltskanzlei PartGmbB
(86) International application number: PCT/CN2024/124229
(87) International publication number: WO 2025/208830

(57) **Abstract**

A battery and an electrical apparatus. The battery (100) includes a first battery cell (20) and a buffer assembly (30). The first battery cell (20) comprises a first surface (24) perpendicular to a first direction (X), the first surface (24) facing another battery cell (20) that is adjacent. The buffer assembly (30) is disposed on the first surface (24). The buffer assembly (30) includes a first buffer member (31), a second buffer member (32), a third buffer member (33), and a fourth buffer member (34) that are each strip-shaped, where the first buffer member (31) and the second buffer member (32) are located on the two sides of a central axis of the first surface (24) that is along a second direction (Y), respectively, and the third buffer member (33) and the fourth buffer member (34) are located on the two sides of a central axis of the first surface (24) that is along a third direction (Z), respectively, the first direction (X), the second direction (Y), and the third direction (Z) being mutually perpendicular. By disposing different buffer members on different edge regions of the first surface (24), the battery (100) is capable of reserving a certain expansion space for the battery cell (20), thereby meeting the expansion requirement of the battery cell (20). Furthermore, separately manufacturing the different buffer members can reduce the probability of material waste caused by repeatedly cutting buffer members.

## Description

### CROSS-REFERENCE

The present application claims the benefit of Chinese Patent Application No. 202420684620.0 entitled "BATTERY AND ELECTRICAL APPARATUS" filed on April 3, 2024, which is entirely incorporated by reference into the present application.

### TECHNICAL FIELD

The present application relates to the field of batteries, and in particular to a battery and an electrical apparatus.

### BACKGROUND

In a battery, battery cells are generally mounted on a bottom of a box body by means of adhesive bonding. When pressure is applied to the battery cells to enhance the connection stability between the battery cells and the box body, it is easy to cause adhesive to overflow into a gap formed between two adjacent battery cells. Thus, during the cyclic expansion process of the battery cell, the battery cell is subjected to non-uniform force, leading to the phenomenon of localized lithium plating.

To mitigate localized lithium plating caused by overflow of adhesive between two adjacent battery cells, a buffer assembly is typically provided between the two adjacent battery cells. The buffer assembly is used to block adhesive at the bottom of the box body from overflowing between the two adjacent battery cells. Due to the complex structure of current buffer assemblies, their production costs are high. Therefore, there is an urgent need for a buffer assembly with low production costs.

### SUMMARY OF THE INVENTION

In view of the aforementioned problems, the present application provides a battery and an electrical apparatus.

In a first aspect, the present application provides a battery. The battery includes a first battery cell and a buffer assembly. The first battery cell includes a first surface perpendicular to a first direction, the first surface facing another battery cell that is adjacent; and the buffer assembly is disposed on the first surface, the buffer assembly including a first buffer member, a second buffer member, a third buffer member, and a fourth buffer member that are each strip-shaped, where the first buffer member and the second buffer member are located on the two sides of a central axis of the first surface that is along a second direction, respectively, and the third buffer member and the fourth buffer member are located on the two sides of a central axis of the first surface that is along a third direction, respectively, the first direction, the second direction, and the third direction being mutually perpendicular.

In the technical solution of the embodiments of the present application, different buffer members of the buffer assembly are disposed on different edge regions of the first surface of the battery cell. When the battery cell expands, a degree of expansion of a central region of the first surface of the battery cell is greater than a degree of expansion of an edge region of the first surface. Therefore, disposing the different buffer members on the different edge regions of the first surface enables reservation of a certain expansion space for the battery cell, thereby meeting the expansion requirement of the battery cell.

Furthermore, separately manufacturing the different buffer members can reduce the probability of material waste caused by repeatedly cutting buffer members due to the fact that the obtained buffer members do not meet actual requirements because of centralized fabrication of all buffer members, thereby saving materials required for fabricating the buffer members.

In some embodiments, projections of the first buffer member, the second buffer member, the third buffer member, and the fourth buffer member along the first direction are completely staggered.

Because the projections of all the buffer members along the first direction do not overlap, after all the buffer members are installed on the first surface, there will be no situation where some portions of two buffer members are stacked along the first direction. This can reduce the probability that, due to some portions of the buffers being stacked together, the thickness of the stacked portions being greater than that of other portions, which would cause stress concentration at the stacked portion.

In some embodiments, the first buffer member, the second buffer member, the third buffer member, and the fourth buffer member are arranged spaced apart from each other.

A certain spacing is reserved between two adjacent buffer members, which can serve as a pressing space when the buffer members are pressed, reducing the probability of lithium plating caused by stress concentration resulting from overlapping of some portions of the two adjacent buffer members when the pressing members are pressed. Furthermore, compared to connecting the end portions of two adjacent buffer members together, the aforementioned method can also reduce the amount of material required to fabricate the buffer members, thereby lowering the production cost of the buffer assembly.

In some embodiments, the first battery cell includes an electrode assembly, the electrode assembly including a tab extending out along the third direction, where the first buffer member and the second buffer member are disposed parallel to the third direction, and the first buffer member and the second buffer member are symmetrically distributed relative to the central axis of the first surface that is along the third direction.

When the battery cell expands and presses against the first buffer member and the second buffer member, because the distances of the first buffer member and the second buffer member from the second central axis in the second direction are equal, the external forces applied by the first buffer member and the second buffer member to the battery cell are substantially equal. Therefore, the pressing forces received by the battery cell from the first buffer member and the second buffer member are relatively uniform, reducing the probability of the battery cell tilting due to non-uniform force.

In some embodiments, the first battery cell includes an electrode assembly, the electrode assembly including a tab extending out along the third direction, where the third buffer member and the fourth buffer member are disposed parallel to the second direction, and the third buffer member and the fourth buffer member are symmetrically distributed relative to the central axis of the first surface that is along the second direction.

When the battery cell expands and presses against the third buffer member and the fourth buffer member, because the distances of the third buffer member and the fourth buffer member from the first central axis in the third direction are equal, the external forces applied by the third buffer member and the fourth buffer member to the battery cell are substantially equal. Therefore, the pressing forces received by the battery cell from the third buffer member and the fourth buffer member are relatively uniform, reducing the probability of the battery cell tilting due to non-uniform force.

In some embodiments, the battery includes a carrier plate, and the first battery cell includes a second surface, the second surface being adjacent to the first surface, the second surface being connected to the carrier plate by means of adhesion, the carrier plate being perpendicular to the third direction, and the fourth buffer member being arranged closer to the carrier plate than the third buffer member,
where a maximum distance between the first buffer member and the fourth buffer member is less than a maximum distance between the first buffer member and the third buffer member.

Thus, the amount of material for fabricating the buffer members can be reduced as much as possible without affecting the use effect of the buffer assembly.

In some embodiments, the battery includes a carrier plate, and the first battery cell includes a second surface, the second surface being adjacent to the first surface, the second surface being connected to the carrier plate by means of adhesion, the carrier plate being perpendicular to the third direction, and the fourth buffer member being arranged closer to the carrier plate than the third buffer member,
where a maximum distance between the second buffer member and the fourth buffer member is less than a maximum distance between the second buffer member and the third buffer member.

Thus, the amount of material for fabricating the buffer members can be reduced as much as possible without affecting the use effect of the buffer assembly.

In some embodiments, a maximum distance between the first buffer member and the third buffer member along the third direction is less than or equal to 5.5 mm.

Thus, the probability of localized lithium plating caused by stress concentration due to increased thickness at overlapping portions resulting from overlapping of the first buffer member and the third buffer member is reduced.

In some embodiments, a maximum distance between the second buffer member and the third buffer member along the third direction is less than or equal to 5.5 mm.

Thus, the probability of localized lithium plating caused by stress concentration due to increased thickness at overlapping portions resulting from overlapping of the second buffer member and the third buffer member is reduced.

In some embodiments, the first battery cell includes an electrode assembly, the electrode assembly including a tab extending out along the third direction, where the third buffer member is arranged closer to the tab than the fourth buffer member, and an elasticity of the fourth buffer member is greater than an elasticity of the third buffer member.

Making the elasticity of the fourth buffer member greater than the elasticity of the third buffer member can provide relatively more buffer space for an overlapping portion of the electrode plates.

In some embodiments, the electrode assembly includes a body, the tab protruding from the body, and the fourth buffer member being opposite to at least a portion of the body along the first direction.

Therefore, the fourth buffer member is enabled to have a strong elastic deformation capability, which can provide relatively more buffer space for the electrode assembly, that is, relatively more buffer space for the battery cell, and reduce the reaction force applied by the fourth buffer member to the body.

In some embodiments, the first battery cell includes an end cover and a case, the end cover being engaged with the case along the third direction, and the end cover being welded to the case, where the third buffer member is arranged closer to the end cover than the fourth buffer member, and a weld seam formed by welding the end cover and the case is completely staggered from the third buffer member.

When the battery cell expands, the third buffer member does not press against the weld seam, which can reduce the probability of affecting the normal operation of the battery cell caused by cracks between the case and the end cover resulting from the weld seam being damaged due to long-term pression by the expanded third buffer member.

In some embodiments, the first surface includes a first edge, the first edge being located on a side of the first surface that is close to the end cover along the third direction, where the weld seam is located between the third buffer member and the first edge.

Thus, not only can the weld seam be protected from being pressed when the third buffer member expands, but also the probability of the first weld seam being worn can be reduced, thereby improving the connection stability between the end cover and the case.

In some embodiments, the first battery cell includes an end cover and a case, the end cover being engaged with the case along the third direction, and the end cover being welded to the case, where the third buffer member is arranged closer to the end cover than the fourth buffer member; and an edge of the first surface on a side close to the end cover along the third direction is a first edge, where a maximum distance between the third buffer member and the first edge along the third direction is less than or equal to 1.5 mm.

Considering the assembly tolerance of the third buffer member during the assembly process, in order not to affect normal use of the end cover and the third buffer member, the distance between the third buffer member and the first edge along the third direction is defined, thereby ensuring the assembly quality of the end cover and the third buffer member and the stable operation of the battery cell.

In some embodiments, the first battery cell includes a first side surface, the first side surface being adjacent to the first surface, and the first side surface and the first surface being transitionally connected by a fillet surface, where the second buffer member is arranged closer to the first side surface than the first buffer member, and the second buffer member is arranged spaced apart from the fillet surface.

Thus, even without providing a buffer member between the fillet surfaces corresponding to two adjacent battery cells, a certain expansion space can be provided for the battery cell. Such an arrangement can reduce the amount of buffer members used, thereby lowering the production cost of the buffer assembly.

In some embodiments, a maximum distance between the fillet surface and the second buffer member along the second direction is less than or equal to 1.5 mm.

Considering the assembly tolerance of the second buffer member, in order for the normal use of the second buffer member, the distance between the second buffer member and the fillet surface along the second direction is defined, thereby ensuring the assembly quality of the second buffer member and the stable operation of the battery cell.

In some embodiments, the first battery cell includes a case and an electrode assembly, the case including a first case wall, with the first case wall extending perpendicular to the third direction, where a support member is disposed between the electrode assembly and the first case wall, the fourth buffer member is arranged closer to the first case wall than the third buffer member, and the fourth buffer member is arranged spaced apart from an outer surface of the first case wall.

Thus, there is no need to connect the fourth buffer member and the first case wall together, which can further reduce the amount of buffer members used, thereby lowering the production cost of the buffer assembly.

In some embodiments, the first battery cell includes a case and an electrode assembly, the electrode assembly being accommodated within the case, and the case including a first case wall perpendicular to the third direction, where a maximum distance between the fourth buffer member and an outer surface of the first case wall along the third direction is less than or equal to 1.5 mm.

During the assembly process, considering the assembly tolerance of the fourth buffer member, in order not to affect normal use of the fourth buffer member, the distance between the fourth buffer member and the first case wall along the third direction is defined, thereby ensuring the assembly quality of the fourth buffer member and the stable operation of the battery cell.

In some embodiments, a length of the first buffer member along the second direction is a, where 3 mm ≤ a ≤ 10 mm.

Thus, by defining the width range of the first buffer member, the processable range of the first buffer member can be expanded without affecting the use performance of the first buffer member, and different buffer members with different widths can be combined for use to adapt to batteries having first surfaces of different sizes, thereby expanding the application range of the buffer assembly.

In some embodiments, a length of the second buffer member along the second direction is b, where 3 mm ≤ b ≤ 10 mm.

Thus, by defining the width range of the second buffer member, the processable range of the second buffer member can be expanded without affecting the use performance of the first buffer member, and different buffer members with different widths can be combined for use to adapt to batteries having first surfaces of different sizes, thereby expanding the application range of the buffer assembly.

In some embodiments, a length of the third buffer member along the third direction is c, where 3 mm ≤ c ≤ 8 mm.

Thus, by defining the width range of the third buffer member, the processable range of the third buffer member can be expanded without affecting the use performance of the third buffer member, and different buffer members with different widths can be combined for use to adapt to batteries having first surfaces of different sizes, thereby expanding the application range of the buffer assembly.

In some embodiments, a length of the fourth buffer member along the third direction is d, where 3 mm ≤ d ≤ 8 mm.

Thus, by defining the width range of the fourth buffer member, the processable range of the fourth buffer member can be expanded without affecting the use performance of the fourth buffer member, and different buffer members with different widths can be combined for use to adapt to batteries having first surfaces of different sizes, thereby expanding the application range of the buffer assembly.

In some embodiments, the first buffer member, the second buffer member, the third buffer member, and the fourth buffer member jointly enclose a closed frame.

Thus, the connection stability between two adjacent buffer members of the enclosed frame is good, which can improve the overall connection stability of the frame.

In a second aspect, the present application provides an electrical apparatus, including the battery according to the aforementioned embodiments, where the battery is configured to provide electrical energy.

When different buffer members of the buffer assembly in the electrical apparatus are disposed on different edge regions of the first surface of the battery cell. When the battery cell expands, a degree of expansion of a central region of the first surface of the battery cell is greater than a degree of expansion of an edge region of the first surface. Therefore, disposing the different buffer members on the different edge regions of the first surface enables reservation of a certain expansion space for the battery cell, thereby meeting the expansion requirement of the battery cell.

Furthermore, separately manufacturing the different buffer members can reduce the probability of material waste caused by repeatedly cutting buffer members due to the fact that the obtained buffer members do not meet actual requirements because of centralized fabrication of all buffer members, thereby saving materials required for fabricating the buffer members.

The above description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### DESCRIPTION OF DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings can also be obtained based on these drawings without any creative effort. In the accompanying drawings:
FIG. 1 is a schematic structural diagram of a vehicle according to one or more embodiments.
FIG. 2 is an exploded view of a battery according to one or more embodiments.
FIG. 3 is an exploded view of a battery cell according to one or more embodiments.
FIG. 4 is a schematic structural diagram of a battery with a partial structure omitted according to one or more embodiments.
FIG. 5 is a schematic structural diagram of the battery in FIG. 4 from another perspective.
FIG. 6 is a perspective view of a battery cell assembled with a buffer assembly according to one or more embodiments.
FIG. 7 is a front view of a battery cell assembled with a buffer assembly according to one or more embodiments.
FIG. 8 is a cross-sectional view of a battery cell assembled with a buffer assembly according to one or more embodiments.
FIG. 9 is a cross-sectional view of a battery cell assembled with a buffer assembly according to one or more embodiments.
FIG. 10 is a front view of a battery cell assembled with a buffer assembly according to one or more embodiments.

### Reference numerals in the Detailed Description are as follows:

1000. vehicle;
100. battery; 200. controller; 300. motor;
10: box body; 11: first portion; 12: second portion; 20: battery cell; 21: end cover; 21a: electrode terminal; 22: case; 23: electrode assembly; 24: first surface; 241: first central axis; 242: second central axis; 25: second surface; 26: fillet surface; 27: first case wall; 28: first side surface; 29: second side surface; 30: buffer assembly; 31: first buffer member; 32: second buffer member; 33: third buffer member; 34: fourth buffer member; X: first direction; Y: second direction; Z: third direction.

### DETAILED DESCRIPTION

The technical solutions in the embodiments of the present application will be clearly and completely described below in conjunction with the drawings in the embodiments of the present application, and it is apparent that the described embodiments are only a part of the embodiments of the present application rather than all the embodiments. All the other embodiments obtained by a person of ordinary skill in the art based on the embodiments of the present application without any creative effort shall fall within the scope of protection of the present application.

In the description of the embodiments of the present application, if the technical terms "first", "second" or the like are present, they are only used for distinguishing different objects, and cannot be understood as indicating or implying relative importance or implying the number, specific order or primary and secondary relationship of the technical features indicated. In the description of the embodiments of the present application, the meaning of " a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, if any, the term "a plurality of' refers to two or more (including two). In the description of the embodiments of the present application, if any, the technical terms "central", "length", "width", "thickness", "bottom", "inner", "outer", and other indicated orientations or positional relationships are based on the orientations or positional relationships shown in the drawings, which are only for facilitating the description of the embodiments of the present application and simplifying the description, rather than indicating or implying that the referred apparatus or element must have a specific orientation, be constructed and operated in a specific orientation, and therefore cannot be understood as a limitation to the embodiments of the present application.

In the description of the embodiments of the present application, unless otherwise expressly specified and limited, if present, the technical terms "mount," "couple," "connect," "fix", etc., should be understood in a broad sense, such as, a fixed connection, a detachable connection, or an integral connection; or a mechanical connection, or an electrical connection; or direct connection, indirect connection through an intermediate medium, or an internal communication of two elements, or interaction between two elements. For those of ordinary skill in the art, the specific meanings of the aforementioned terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, their market demand is also constantly increasing.

During the cyclic use of a battery, battery cells of the battery may expand. The expansion of a battery cell is primarily caused by the expansion of the electrode assembly. After the electrode assembly expands, it not only affects the case of the battery cell where the electrode assembly is located but can also affect adjacent battery cells, leading to damage or electrolyte leakage in the case of the battery cell, thereby affecting the reliability of the battery cell. Therefore, a buffer assembly is generally provided between two adjacent battery cells to reserve expansion space for the battery cells.

However, the buffer assemblies currently used are often not only complex in structure but also require repeated cutting, resulting in waste of the fabrication materials for the buffer assembly and increasing the production cost of the buffer assembly.

To reduce the production cost of the buffer assembly, embodiments of the present application provide a battery. Four strip-shaped buffer members are provided on the first surface of a battery cell that faces another battery cell, and the four buffer members are divided into two groups, each group including two buffer members, with the two buffer members in each group being arranged spaced apart and parallel to each other along the same direction, where the extension directions of the two groups of buffer members are perpendicular to each other, which simplifies the structure of the buffer assembly, thereby reducing the production cost of the buffer assembly.

The battery disclosed in the embodiments of the present application can be used in, but not limited to, an electrical apparatus such as a vehicle, a ship, or an aircraft, and can be used in a power system of the electrical apparatus comprising the battery disclosed in the present application.

An embodiment of the present application provides an electrical apparatus that uses a battery as a power source. The electrical apparatus may be, but is not limited to, a mobile phone, a tablet, a laptop, an electric toy, an electric tool, a storage battery car, an electric vehicle, a ship, a spacecraft, etc. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

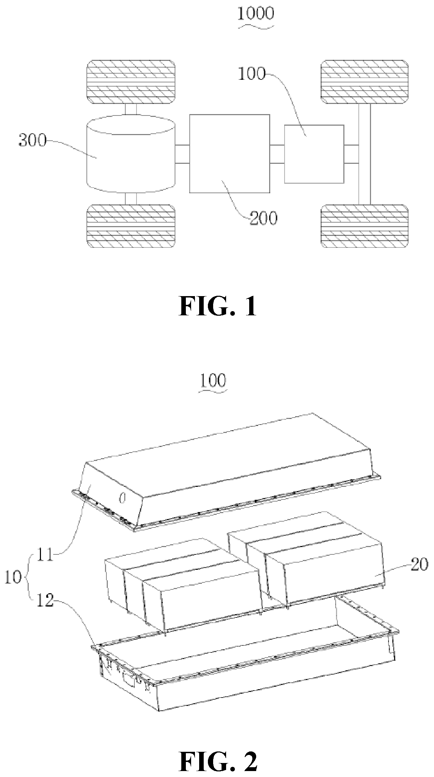

Referring to FIG. 1, FIG. 1 is a schematic structural view of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is provided inside the vehicle 1000, and the battery 100 may be disposed at a bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is an exploded view of a battery 100 provided in some embodiments of the present application. The battery 100 includes a box body 10 and a battery cell 20, where the battery cell 20 is accommodated within the box body 10. The box 10 is used to provide an accommodating space for the battery cell 20, and the box 10 can be of various structures. In some embodiments, the box 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodating space. The first portion 11 and the second portion 12 may each be of a hollow structure with an opening at one end, where the opening side of the first portion 11 covers the opening side of the second portion 12. Of course, the box 10 formed by the first portion 11 and the second portion 12 may be of a variety of shapes, such as a cylinder and a rectangular solid.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series connection, and then the whole composed of the plurality of battery cells 20 may be accommodated in the box 10. Of course, the battery 100 may also be in the form of a battery module first formed by the plurality of battery cells 20 being connected in series or in parallel or in parallel-series connection, then the plurality of battery modules may be connected in series or in parallel or in parallel-series connection to form a whole, and accommodated in the box 10. The battery 100 may further include other structures, for example, the battery 100 may further include a bus component configured to realize electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in the shape of a cylinder, a flat body, a cuboid or others.

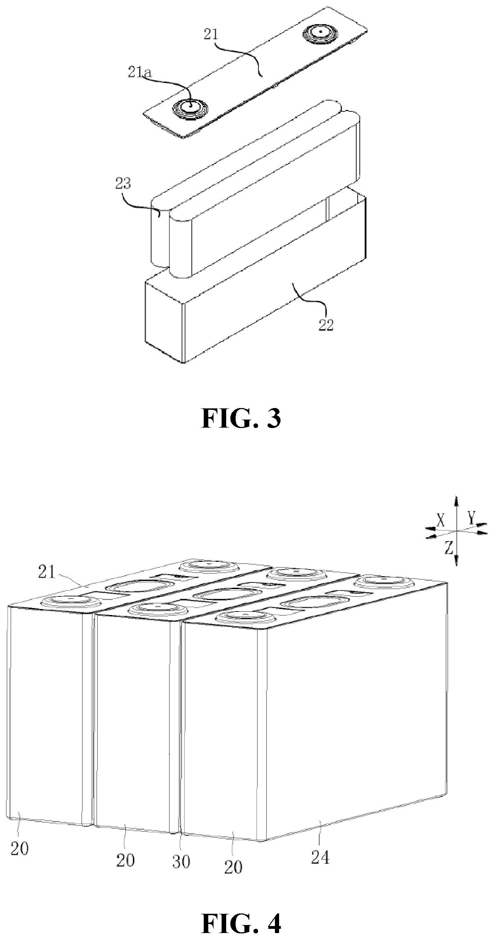

Referring to FIG. 3, and FIG. 3 is a schematic exploded structural diagram of a battery cell 20 provided in some embodiments of the present application. A battery cell 20 is the smallest unit that makes up the battery 100. As shown in FIG. 3, the battery cell 20 includes an end cover 21, a case 22, an electrode assembly 23, and other functional components.

The end cover 21 refers to a component that covers an opening of the case 22 to isolate an internal environment of the battery cell 20 from an external environment. Without limitation, the shape of the end cover 21 may be adapted to the shape of the case 22 to fit the case 22. Optionally, the end cover 21 may be made of a material (such as an aluminum alloy) with a certain hardness and strength, such that the end cover 21 is less likely to deform when being pressed and collided, enabling the battery cell 20 to have a higher structural strength, and also the safety performance to be improved. Functional components such as an electrode terminal 21a may be provided on the end cover 21. The electrode terminals 21a can be configured to electrically connected to the electrode assembly 23 for use in outputting or inputting electrical energy from or to the battery cell 20. In some embodiments, the end cover 21 may be further provided with a pressure relief mechanism configured to relieve internal pressure when the internal pressure or temperature of the battery cell 20 reaches a threshold. The end cover 21 may be made of various materials, such as copper, iron, aluminum, stainless steel, an aluminum alloy, and plastic, which is not particularly limited in this embodiment of the present application. In some embodiments, an insulating member may be further provided on an inner side of the end cover 21 and may be used for isolating an electrical connection component in the case 22 from the end cover 21, thereby reducing the risk of short circuit. For example, the insulating member may be made of plastic, rubber, and the like.

The shell 23 is an assembly to be mated with the end cover 21 to form the internal environment of the battery cell 20. The formed internal environment can be used to accommodate the electrode assembly 22, an electrolytic solution, and other components. The shell 22 and the end cover 21 may be separate components, an opening may be formed in the shell 22, and at the opening, the opening is covered with the end cover 21 so as to form the internal environment of the battery cell 20. Without limitation, the end cover 21 and the case 22 may also be integrated. Specifically, the end cover 21 and the case 22 may form a common connection surface before other components enter the case. When an interior of the case 22 is required to be encapsulated, the end cover 21 is enabled to cover the case 22. The case 22 may be in various shapes and sizes, such as a cuboid, a cylinder, or a hexagonal prism. Specifically, the shape of the case 22 may be determined according to the specific shape and size of the electrode assembly 23. The case 22 may be made of various materials, such as copper, iron, aluminum, stainless steel, an aluminum alloy, and plastic, which is not particularly limited in this embodiment of the present application.

The electrode assembly 23 is a component in the battery cell 20 where an electrochemical reaction occurs. One or more electrode assemblies 23 may be contained within the case 22. The electrode assembly 23 is formed primarily by the winding or laminated placement of a positive electrode plate and a negative electrode plate, and is usually provided with a diaphragm between the positive electrode plate and the negative electrode plate. The portions of the positive electrode plate and the negative electrode plate that have active material constitute the body of the battery cell assembly, and the portions of the positive electrode plate and the negative electrode plate that do not have active material constitute the tabs, respectively. The positive tab and the negative tab may be located together at one end of the body or at two ends of the body, respectively. During charging and discharging of the battery, the positive electrode active material and the negative electrode active material react with the electrolyte solution, and the tabs are connected to the electrode terminal 21a to form a current loop.

The battery provided by the embodiments of the present application is described below in conjunction with a specific embodiment where the battery cell 20 is a prismatic battery cell.

With reference to FIGS. 4 to 6, an embodiment of the present application provides a battery 100. The battery 100 includes a first battery cell 20 and a buffer assembly 30. The first battery cell 20 includes a first surface 24 perpendicular to a first direction X, the first surface 24 facing another battery cell 20 that is adjacent; and the buffer assembly 30 is disposed on the first surface 24, the buffer assembly 30 including a first buffer member 31, a second buffer member 32, a third buffer member 33, and a fourth buffer member 34 that are each strip-shaped, where the first buffer member 31 and the second buffer member 32 are located on the two sides of a central axis of the first surface 24 that is along a second direction Y, respectively, and the third buffer member 33 and the fourth buffer member 34 are located on the two sides of a central axis of the first surface 24 that is along a third direction, respectively, the first direction X, the second direction Y, and the third direction Z being mutually perpendicular.

A plurality of battery cells 20 are generally distributed along the same direction within the battery 100. The first surface 24 of the battery cell 20 includes a central axis extending along the second direction Y and a central axis along the third direction Z. For ease of distinction, the central axis extending along the second direction Y may be referred to as a first central axis 241, and the central axis extending along the third direction Z may be referred to as a second central axis 242.

It can be understood that, along the third direction Z, the distances from the first central axis 241 to the two edges of the first surface 24 are equal. Along the second direction Y, the distances from the first central axis 241 to the two edges of the first surface 24 are equal.

The buffer assembly 30 is disposed between two adjacent battery cells 20, and is configured to adapt to a gap formed between the two adjacent battery cells 20 and provide a certain expansion space for the battery cell 20, so as to buffer and damp the battery cell 20. The four buffer members of the buffer assembly 30 may jointly enclose a closed structure or an unclosed structure. When all the buffer members enclose an unclosed structure, each buffer member is disposed independently of the others.

It should be noted that the fabrication materials of the buffer members may be the same, and there may be differences in their elastic deformation.

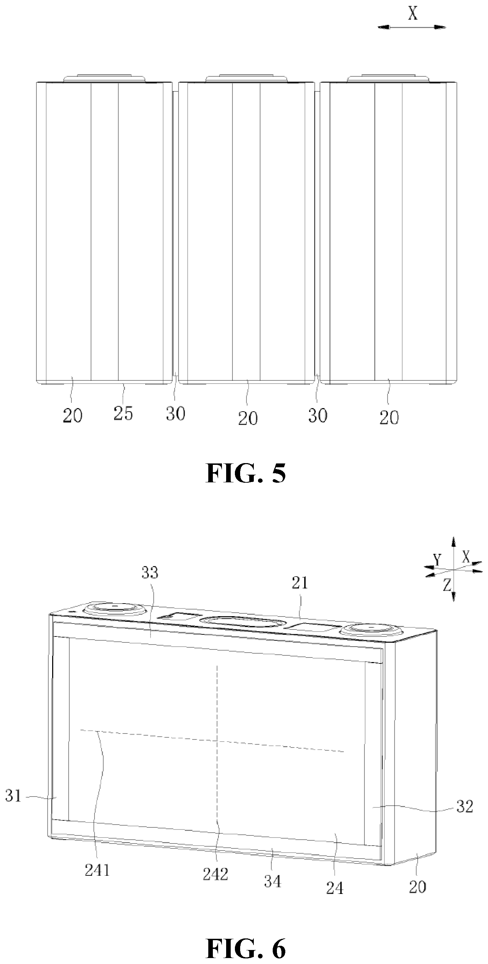

As an example, as shown in FIGS. 4 and 5, a plurality of battery cells 20 are distributed along the first direction X, and a buffer assembly 30 may be disposed between every two adjacent battery cells 20. The first direction X, the second direction Y, and the third direction Z can be regarded as the thickness direction, the length direction, and the width direction, respectively, of the corresponding battery cell 20 in the figures.

Description is provided by taking a case where a prismatic battery cell is used as the battery cell 20, one battery cell 20 of the plurality of battery cells 20 is used as the first battery cell 20, and the buffer assembly 30 is installed on the first battery cell 20 as an example.

The first surface 24 of the first battery cell 20 is provided with the buffer assembly 30. The buffer assembly 30 may be installed on the first surface 24 by, but not limited to, means of adhesion.

As shown in FIG. 6, assume that the first surface 24 has a first central axis 241 extending along the second direction Y and a second central axis 242 extending along the third direction Z. In some examples, the first buffer member 31 and the second buffer member 32 are distributed on two sides of the second central axis 242 along the second direction Y, and both the first buffer member 31 and the second buffer member 32 are disposed extending along the third direction Z. The third buffer member 33 and the fourth buffer member 34 are distributed on two sides of the first central axis 241 along the third direction Z, and both the third buffer member 33 and the fourth buffer member 34 are disposed extending along the second direction Y.

In some other examples, the first buffer member 31 and the second buffer member 32 are distributed on two sides of the first central axis 241 along the third direction Z, and both the first buffer member 31 and the second buffer member 32 are disposed extending along the second direction Y. The third buffer member 33 and the fourth buffer member 34 are distributed on two sides of the second central axis 242 along the second direction Y, and both the third buffer member 33 and the fourth buffer member 34 are disposed extending along the third direction Z.

Thus, it can be seen that different buffer members of the buffer assembly 30 are disposed on different edge regions of the first surface 24 of the battery cell 20. When the battery cell 20 expands, a degree of expansion of a central region of the first surface 24 of the battery cell 20 is greater than a degree of expansion of an edge region of the first surface 24. Therefore, disposing the different buffer members on the different edge regions of the first surface 24 enables reservation of a certain expansion space for the battery cell 20, thereby meeting the expansion requirement of the battery cell 20.

Furthermore, separately manufacturing the different buffer members can reduce the probability of material waste caused by repeatedly cutting buffer members due to the fact that the obtained buffer members do not meet actual requirements because of centralized fabrication of all buffer members, thereby saving materials required for fabricating the buffer members.

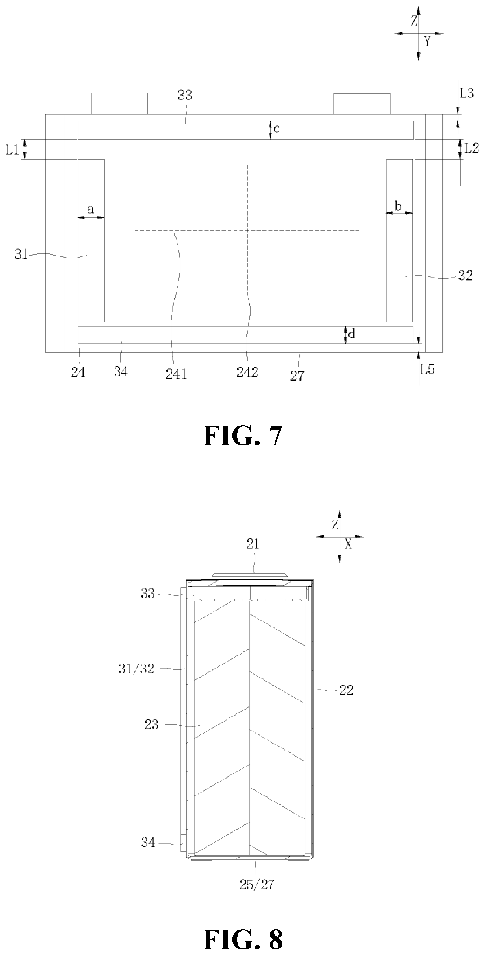

In some embodiments, with reference to FIGS. 6 and 7, projections of the first buffer member 31, the second buffer member 32, the third buffer member 33, and the fourth buffer member 34 along the first direction X are completely staggered.

In other words, the projection contours of two adjacent buffer members along the first direction X are spaced apart by a distance, or are just tangent to each other. For example, the first buffer member 31 and the second buffer member 32 are closer to the fourth buffer member 34 than the third buffer member 33, and the first buffer member 31 is closer to a first end portion of the fourth buffer member 34 than the second buffer member 32. A projection of the first buffer member 31 along the first direction X and a projection of the first end portion of the fourth buffer member 34 along the first direction X do not overlap. Naturally, projections of other portions of the fourth buffer member 34 along the first direction X and the projection of the first buffer member 31 along the first direction X also do not overlap.

Similarly, a projection of the second buffer member 32 along the first direction X and a projection of the fourth buffer member 34 along the first direction X also do not overlap. By analogy, projections of all the buffer members along the first direction X do not overlap.

Because the projections of all the buffer members along the first direction X do not overlap, after all the buffer members are installed on the first surface 24, there will be no situation where some portions of two buffer members are stacked along the first direction X. This can reduce the probability that, due to some portions of the buffers being stacked together, the thickness of the stacked portions being greater than that of other portions, which would cause stress concentration at the stacked portion.

As shown in FIG. 7, in some embodiments, the first buffer member 31, the second buffer member 32, the third buffer member 33, and the fourth buffer member 34 are arranged spaced apart from each other.

In other words, projections of the first buffer member 31, the second buffer member 32, the third buffer member 33, and the fourth buffer member 34 along the first direction X are all spaced apart by a distance.

As an example, as shown in FIG. 7, a shape jointly enclosed by the first buffer member 31, the second buffer member 32, the third buffer member 33, and the fourth buffer member 34 is an unclosed frame. Two adjacent buffer members are not connected and are spaced apart by a distance.

When the battery cell 20 expands and presses against the buffer members, some portions of two adjacent buffer members may be caused to overlap under the pressing force, resulting in stress concentration at the overlapping portion and thereby causing the problem localized lithium plating.

A certain spacing is reserved between two adjacent buffer members, which can serve as a pressing space when the buffer members are pressed, reducing the probability of lithium plating caused by stress concentration resulting from overlapping of some portions of the two adjacent buffer members when the pressing members are pressed. Furthermore, compared to connecting the end portions of two adjacent buffer members together, the aforementioned method can also reduce the amount of material required to fabricate the buffer members, thereby lowering the production cost of the buffer assembly 30.

With reference to FIGS. 7 and 8, in some embodiments, the first battery cell 20 includes an electrode assembly 23, the electrode assembly 23 including a tab (not shown in the figure) extending out along the third direction Z, where the first buffer member 31 and the second buffer member 32 are disposed parallel to the third direction Z, and the first buffer member 31 and the second buffer member 32 are symmetrically distributed relative to the central axis of the first surface 24 that is along the third direction Z.

Because the central axis (the second central axis 242) of the first surface 24 that extends along the third direction Z actually coincides with the central axis of the electrode assembly 23 that extends along the third direction Z, the first buffer member 31 and the second buffer member 32 are actually distributed at two edges of the first surface 24 distributed along the second direction Y, and the distances of the first buffer member 31 and the second buffer member 32 from the second central axis 242 are equal.

When the battery cell 20 expands and presses against the first buffer member 31 and the second buffer member 32, because the distances of the first buffer member 31 and the second buffer member 32 from the second central axis 242 in the second direction Y are equal, the external forces applied by the first buffer member 31 and the second buffer member 32 to the battery cell 20 are substantially equal. Therefore, the pressing forces received by the battery cell 20 from the first buffer member 31 and the second buffer member 32 are relatively uniform, reducing the probability of the battery cell 20 tilting due to non-uniform force.

With continued reference to FIG. 7, in some embodiments, the first battery cell 20 includes an electrode assembly 23, the electrode assembly 23 including a tab extending out along the third direction Z, where the third buffer member 33 and the fourth buffer member 34 are disposed parallel to the second direction Y, and the third buffer member 33 and the fourth buffer member 34 are symmetrically distributed relative to the central axis of the first surface 24 that is along the second direction Y.

Because the central axis (the first central axis 241) of the first surface 24 that extends along the second direction Y actually coincides with the central axis of the electrode assembly 23 that extends along the second direction Y, the third buffer member 33 and the fourth buffer member 34 are actually distributed at two edges of the first surface 24 that are distributed along the third direction Z, and the distances of the third buffer member 33 and the fourth buffer member 34 from the first central axis 241 are equal.

When the battery cell 20 expands and presses against the third buffer member 33 and the fourth buffer member 34, because the distances of the third buffer member 33 and the fourth buffer member 34 from the first central axis 241 in the third direction Z are equal, the external forces applied by the third buffer member 33 and the fourth buffer member 34 to the battery cell 20 are substantially equal. Therefore, the pressing forces received by the battery cell 20 from the third buffer member 33 and the fourth buffer member 34 are relatively uniform, reducing the probability of the battery cell 20 tilting due to non-uniform force.

With reference to FIGS. 7 and 8, in some embodiments, the battery 100 includes a carrier plate (not shown in the figures), the first battery cell 20 includes a second surface 25, the second surface 25 being adjacent to the first surface 24, the second surface 25 being connected to the carrier plate by means of adhesion, the carrier plate being perpendicular to the third direction Z, and the fourth buffer member 34 being arranged closer to the carrier plate than the third buffer member 33, where a maximum distance between the first buffer member 31 and the fourth buffer member 34 is less than a maximum distance between the first buffer member 31 and the third buffer member 33.

In some embodiments, a maximum distance between the second buffer member 32 and the fourth buffer member 34 is less than a maximum distance between the second buffer member 32 and the third buffer member 33.

The carrier plate is configured to carry all battery cells 20. The maximum distance between the first buffer member 31 and the fourth buffer member 34 can be understood as the size of the gap formed between them in the third direction Z. The maximum distance between the first buffer member 31 and the third buffer member 33 can be understood as the size of the gap formed between them in the third direction Z. The maximum distance between the second buffer member 32 and the fourth buffer member 34 can be understood as the size of the gap formed between them in the third direction Z. The maximum distance between the second buffer member 32 and the third buffer member 33 can be understood as the size of the gap formed between them in the third direction Z. In different embodiments, the sizes of gaps formed between different buffer members are unequal.

In some examples, a maximum distance between the first buffer member 31 and the third buffer member 33 is less than a maximum distance between the first buffer member 31 and the fourth buffer member 34, and maximum distances between other buffer members are not specifically defined.

In other examples, a maximum distance between the second buffer member 32 and the fourth buffer member 34 is less than a maximum distance between the second buffer member 32 and the third buffer member 33, and maximum distances between other buffer members are not specifically defined. In still other examples, a maximum distance between the first buffer member 31 and the third buffer member 33 is less than a maximum distance between the first buffer member 31 and the fourth buffer member 34, and a maximum distance between the second buffer member 32 and the fourth buffer member 34 is less than a maximum distance between the second buffer member 32 and the third buffer member 33.

When the first battery cell 20 is adhered to the carrier plate and the buffer assembly 30 is assembled on the first surface 24, adhesive is actually filled between the fourth buffer member 34 and the carrier plate. Because the gap formed between the first buffer member 31 and the fourth buffer member 34 and the gap formed between the second buffer member 32 to the fourth buffer member 34 are small, it is possible to reduce the probability that adhesive disposed on the carrier plate directly passes through the gap formed between the first buffer member 31 and the fourth buffer member 34, or the gap formed between the second buffer member 32 and the fourth buffer member 34, to reach between two adjacent battery cells 20, thereby causing stress concentration between the two adjacent battery cells 20 and thus inducing localized lithium plating.

Thus, the amount of material for fabricating the buffer members can be reduced as much as possible without affecting the use effect of the buffer assembly 30.

Further, as shown in FIG. 7, in some embodiments, a maximum distance between the first buffer member 31 and the third buffer member 33 along the third direction Z is less than or equal to 5.5 millimeters (mm). In some embodiments, a maximum distance between the second buffer member 32 and the third buffer member 33 along the third direction is less than or equal to 5.5 mm.

For example, in some examples, a maximum distance between the first buffer member 31 and the third buffer member 33 along the third direction Z is L1, L1 being less than or equal to 5.5 mm, and maximum distances between other buffer members are not specifically defined. In some other examples, a maximum distance between the second buffer member 32 and the third buffer member 33 along the third direction Z is L2, L2 being greater than or equal to 5.5 mm, and maximum distances between other buffer members are not specifically defined. In still other examples, a maximum distance L1 between the first buffer member 31 and the third buffer member 33 along the third direction Z is less than or equal to 5.5 mm, and a maximum distance L2 between the second buffer member 32 and the third buffer member 33 along the third direction Z is greater than or equal to 5.5 mm.

When the first buffer member 31 is installed on the first surface 24, because the installation position of the first buffer member 31 and the installation position of the third buffer member 33 are spaced apart by a distance, it is possible to reduce overlapping of the first buffer member 31 with the third buffer member 33, which would cause an increase in thickness at the overlapping portion and leads to stress concentration. Furthermore, if the gap formed between the first buffer member 31 and the third buffer member 33 is enlarged, it may also cause adhesive to overflow from this gap to between two adjacent gaps, resulting in localized stress concentration and inducing localized lithium plating.

Similarly, defining the gap formed between the second buffer member 32 and the third buffer member 33 along the third direction Z is also to reduce overlapping of the second buffer member 32 with the third buffer member 33, which would cause an increase in thickness at the overlapping portion and lead to stress concentration. Furthermore, if the gap formed between the second buffer member 32 and the third buffer member 33 is enlarged, it may cause adhesive to overflow from this gap to between two adjacent gaps, resulting in localized stress concentration and inducing localized lithium plating.

With reference to FIG. 7, in some embodiments, the first battery cell 20 includes an electrode assembly 23, the electrode assembly 23 including a tab extending out along the third direction Z, where the third buffer member 33 is arranged closer to the tab than the fourth buffer member 34, and an elasticity of the fourth buffer member 34 is greater than an elasticity of the third buffer member 33.

The fourth buffer member 34 may be fabricated using a material with a Poisson's ratio greater than 0.45, for example, thermoplastic materials such as rubber, TPU, TPE, etc.

Typically, a space is reserved at the tab, the tab is spaced apart from the electrode plates of the electrode assembly 23 by a distance, and the electrode plates in a wound state have an overlapping portion, where projections of the overlapping portion and the fourth buffer member 34 at least partially overlap along the first direction X. Because the overlapping portion of the electrode plates is more prone to expansion, and the fourth buffer member 34 is closer to the overlapping portion of the electrode plates compared to the third buffer member 33, the expansion space required at the fourth buffer member 34 is greater than the expansion space required at the third buffer member 33. Therefore, making the elasticity of the fourth buffer member 34 greater than the elasticity of the third buffer member 33 can provide relatively more buffer space for the overlapping portion of the electrode plates.

With reference to FIG. 8, in some embodiments, the electrode assembly 23 includes a body, the tab protruding from the body, and the fourth buffer member 34 being opposite to at least a portion of the body along the first direction X.

In some examples, a projection of the fourth buffer member 34 along the first direction X falls entirely within a projection of the body along the first direction X. In other examples, a projection of the fourth buffer member 34 along the first direction X does not fall entirely within a projection of the body along the first direction X.

When the battery cell 20 expands, the body of the electrode assembly 23 is prone to expand and press against the fourth buffer member 34, causing the fourth buffer member 34 to undergo elastic deformation. Therefore, the fourth buffer member 34 is enabled to have a strong elastic deformation capability, which can provide relatively more buffer space for the electrode assembly 23, that is, relatively more buffer space for the battery cell 20, and reduce the reaction force applied by the fourth buffer member 34 to the body.

In some embodiments, as shown in FIG. 8, the first battery cell 20 includes an end cover 21 and a case 22, the end cover 21 being engaged with the case 22 along the third direction Z, and the end cover 21 being welded to the case 22, where the third buffer member 33 is arranged closer to the end cover 21 than the fourth buffer member 34, and a weld seam formed by welding the end cover 21 and the case 22 is completely staggered from the third buffer member 33.

During the process of assembling the battery cell 20, components such as the electrode assembly 23 that need to be assembled inside the case 22 can be loaded into the case 22 along the third direction Z, and the end cover 21 can be engaged and welded with the case 22. A weld seam can be formed through welding between the end cover 21 and the case 22. The third buffer member 33 is arranged close to the end cover 21 and is spaced apart from the weld seam by a distance.

Thus, when the battery cell 20 expands, the third buffer member 33 does not press against the weld seam, which can reduce the probability of affecting the normal operation of the battery cell 20 caused by cracks between the case 22 and the end cover 21 resulting from the weld seam being damaged due to long-term pression by the expanded third buffer member 33.

Specifically, with reference to FIGS. 7 and 8, in some embodiments, the first surface 24 includes a first edge (not shown in the figures), the first edge being located on a side of the first surface 24 along the third direction Z that is close to the end cover 21, where the weld seam is located between the third buffer member 33 and the first edge.

By welding the end cover 21 and the case 22 together, and arranging the weld seam between the third buffer member 33 and the first edge instead of arranging the weld seam at the first edge, not only can the weld seam be protected from being pressed when the third buffer member 33 expands, but also the probability of the weld seam being worn can be reduced, thereby improving the connection stability between the end cover 21 and the case 22.

In some embodiments, the first battery cell 20 includes an end cover 21 and a case 22, the end cover 21 being engaged with the case 22 along the third direction Z, and the end cover 21 being welded to the case 22, where the third buffer member 33 is arranged closer to the end cover 21 than the fourth buffer member 34; and the first surface 24 includes a first edge (not shown in the figures), the first edge being located on a side of the first surface 24 along the third direction Z that is close to the end cover 21, where a maximum distance between the third buffer member 33 and the first edge along the third direction Z is less than or equal to 1.5 mm.

As an example, in the example shown in FIG. 7, a maximum distance between the third buffer member 33 and the first edge along the third direction Z is L3, L3 being equal to 1.5 mm.

Considering the assembly tolerance of the third buffer member 33 during the assembly process, in order not to affect normal use of the end cover 21 and the third buffer member 33, the distance between the third buffer member 33 and the first edge along the third direction Z is defined, thereby ensuring the assembly quality of the end cover 21 and the third buffer member 33 and the stable operation of the battery cell 20.

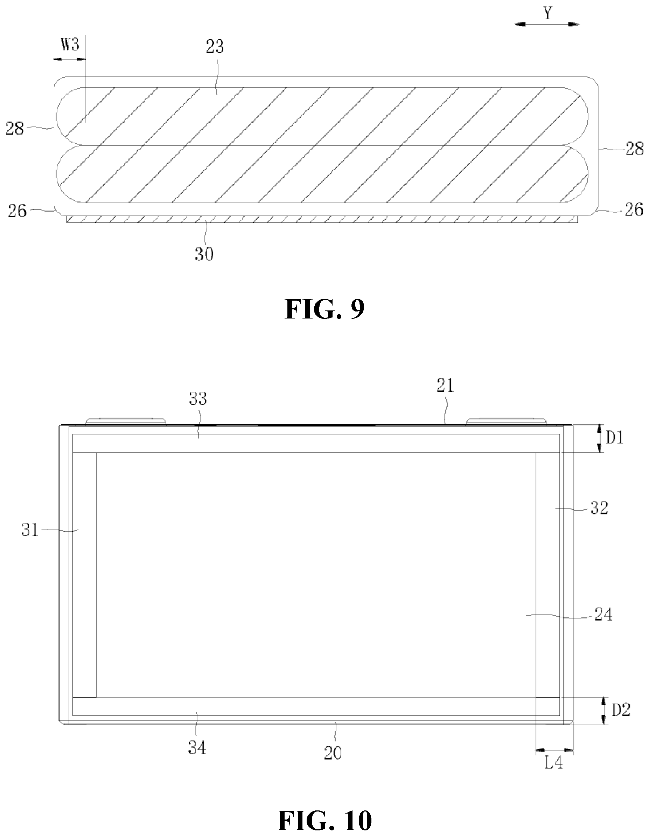

With reference to FIGS. 6 and 9, in some embodiments, the first battery cell 20 includes a first side surface 28, the first side surface 28 being adjacent to the first surface 24, and the first side surface 28 and the first surface 24 being transitionally connected by a fillet surface 26, where the second buffer member 32 is arranged closer to the first side surface 28 than the first buffer member 31, and the second buffer member 32 is arranged spaced apart from the fillet surface 26.

In the example shown in FIG. 9, the first side surface 28 is connected to the first surface 24 along the second direction Y, and a fillet surface 26 is connected between the two. The second buffer member 32 is disposed on a side of the first surface 24 close to the fillet surface 26, and the fillet surface 26 is interposed between the second buffer member 32 and the first side surface 28. Thus, when no buffer assembly 30 is provided between two adjacent battery cells 20, the respective fillet surfaces 26 corresponding to the battery cells 20 in the two adjacent battery cells 20 are spaced apart by a distance. Moreover, since a buffer assembly 30 is provided between the two adjacent battery cells 20, the fillet surfaces 26 corresponding to the two adjacent battery cells 20 are naturally spaced apart by a distance.

Thus, even without providing a buffer member between the fillet surfaces 26 corresponding to two adjacent battery cells 20, a certain expansion space can be provided for the battery cell 20. Such an arrangement can reduce the amount of buffer members used, thereby lowering the production cost of the buffer assembly 30.

Specifically, in some embodiments, a maximum distance between the fillet surface 26 and the second buffer member 32 along the second direction Y is less than or equal to 1.5 mm.

As an example, in the example shown in FIG. 10, a maximum distance between the fillet surface 26 and the second buffer member 32 along the second direction Y is L4, L4 being equal to 1.5 mm.

Considering the assembly tolerance of the second buffer member 32, in order for the normal use of the second buffer member 32, the distance between the second buffer member 32 and the fillet surface 26 along the second direction Y is defined, thereby ensuring the assembly quality of the second buffer member 32 and the stable operation of the battery cell 20.

Similarly, with reference to FIGS. 6, 9, and 10, the first battery cell 20 further includes a second side surface 29, the first side surface 28 and the second side surface 29 being disposed opposite to each other, and the first side surface 28 and the first surface 24 being adjacent and being transitionally connected via a fillet surface 26. The first buffer member 31 is arranged closer to the second side surface 29 than the second buffer member 32, and the first buffer member 31 is arranged spaced apart from the fillet surface 26. A maximum distance between the fillet surface 26 and the first buffer member 31 along the second direction Y is less than or equal to 1.5 mm.

Thus, there is no need to provide a buffer member at both the fillet surfaces 26 of the first surface 24 of the battery cell 20 that are disposed close to the first buffer member 31 and the second buffer member 32. This can reduce the amount of buffer members used, thereby lowering the production cost of the buffer assembly 30.

As shown in FIG. 8, in some embodiments, the first battery cell 20 includes a case 22 and an electrode assembly 23, the case 22 including a first case wall 27, with the first case wall 27 extending perpendicular to the third direction Z, where a support member (not shown in the figure) is disposed between the electrode assembly 23 and the first case wall 27, the fourth buffer member 34 is arranged closer to the first case wall 27 than the third buffer member 33, and the fourth buffer member 34 is arranged spaced apart from an outer surface of the first case wall 27.

The support member is configured to carry the electrode assembly 23. The fourth buffer member 34 is disposed on the first surface 24 of the case 22 and is arranged close to the first case wall 27, but the fourth buffer member 34 and the first case wall 27 are not connected. When the battery 100 assembly expands, it will press against the first surface 24 of the case 22 and will not press against the first case wall 27.

Thus, there is no need to connect the fourth buffer member 34 and the first case wall 27 together, which can further reduce the amount of buffer members used, thereby lowering the production cost of the buffer assembly 30.

Further, as shown in FIG. 7, in some embodiments, the first battery cell 20 includes a case 22 and an electrode assembly 23, the electrode assembly 23 being accommodated within the case 22, and the case 22 including a first case wall 27 perpendicular to the third direction Z, where a maximum distance between the fourth buffer member 34 and an outer surface of the first case wall 27 along the third direction Z is less than or equal to 1.5 mm.

As an example, in the example shown in FIG. 7, a maximum distance between the fourth buffer member 34 and the outer surface of the first case wall 27 along the third direction Z is L5, L5 being equal to 1.5 mm.

During the assembly process, considering the assembly tolerance of the fourth buffer member 34, in order not to affect normal use of the fourth buffer member 34, the distance between the fourth buffer member 34 and the first case wall 27 along the third direction Z is defined, thereby ensuring the assembly quality of the fourth buffer member 34 and the stable operation of the battery cell 20.

In different embodiments, the length, the width, and the thickness of each buffer member may also be adjusted according to actual conditions.

With reference to FIG. 7, in some embodiments, a length of the first buffer member 31 along the second direction Y is a, where 3 mm ≤ a ≤ 10 mm. In some embodiments, a length of the second buffer member 32 along the second direction Y is b, where 3 mm ≤ b ≤ 10 mm. In some embodiments, a length of the third buffer member 33 along the third direction Z is c, where 3 mm ≤ c ≤ 8 mm. In some embodiments, a length of the fourth buffer member 34 along the third direction Z is d, where 3 mm ≤ d ≤ 8 mm.

In some examples, a length of the first buffer member 31 along the second direction Y is a, where 3 mm ≤ a ≤ 10 mm, a length of the second buffer member 32 along the second direction Y is b, where 3 mm ≤ b ≤ 10 mm, and a length of the third buffer member 33 along the third direction Z is c, where 3 mm ≤ c ≤ 8 mm.

In some other examples, a length of the first buffer member 31 along the second direction Y is a, where 3 mm ≤ a ≤ 10 mm, a length of the second buffer member 32 along the second direction Y is b, where 3 mm ≤ b ≤ 10 mm, and a length of the fourth buffer member 34 along the third direction Z is d, where 3 mm ≤ d ≤ 8 mm.

In still other examples, a length of the first buffer member 31 along the second direction Y is a, where 3 mm ≤ a ≤ 10 mm, a length of the second buffer member 32 along the second direction Y is b, where 3 mm ≤ b ≤ 10 mm, a length of the third buffer member 33 along the third direction Z is c, where 3 mm ≤ c ≤ 8 mm, and a length of the fourth buffer member 34 along the third direction Z is d, where 3 mm ≤ d ≤ 8 mm. These are not exhaustively listed. Herein, the length of each of the aforementioned buffer members along the second direction Y can be understood as the width of the buffer member.

Thus, by defining the width ranges of the buffer members, the processable ranges of the buffer members can be expanded without affecting the use performance of the buffer members, and different buffer members with different widths can be combined for use to adapt to batteries 100 having first surfaces 24 of different sizes, thereby expanding the application range of the buffer assembly 30.

With reference to FIG. 10, in some embodiments, the first buffer member 31, the second buffer member 32, the third buffer member 33, and the fourth buffer member 34 jointly enclose a closed frame.

As an example, the first buffer member 31 and the second buffer member 32 are distributed spaced apart along the second direction Y, and both extend along the third direction Z. The third buffer member 33 and the fourth buffer member 34 are distributed spaced apart along the third direction Z, and both extend along the second direction Y. All buffer members are sequentially connected end to end, forming a quadrilateral frame.

Thus, the connection stability between two adjacent buffer members of the enclosed frame is good, which can improve the overall connection stability of the frame.

Furthermore, some embodiments of the present application further provide an electrical apparatus, including the battery 100 according to the aforementioned embodiments, where the battery 100 is configured to provide electrical energy. For related content regarding the battery 100, reference is made to the above description, which will not be repeated in detail here.

When different buffer members of the buffer assembly 30 in the electrical apparatus are disposed on different edge regions of the first surface 24 of the battery cell 20. When the battery cell 20 expands, a degree of expansion of a central region of the first surface 24 of the battery cell 20 is greater than a degree of expansion of an edge region of the first surface 24. Therefore, disposing the different buffer members on the different edge regions of the first surface 24 enables reservation of a certain expansion space for the battery cell 20, thereby meeting the expansion requirement of the battery cell 20.

Furthermore, separately manufacturing the different buffer members can reduce the probability of material waste caused by repeatedly cutting buffer members due to the fact that the obtained buffer members do not meet actual requirements because of centralized fabrication of all buffer members, thereby saving materials required for fabricating the buffer members.

Specifically, in one embodiment, as shown in FIG. 7, the battery 100 includes a plurality of battery cells 20 and a plurality of buffer assemblies 30. The battery cell 20 includes a first surface 24, the first surface 24 having a first central axis 241 extending along the second direction Y and a second central axis 242 extending along the third direction Z. The first surface 24 of one battery cell 20 faces another battery cell 20 that is adjacent.

The first surface 24 of the battery cell 20 is provided with a buffer assembly 30. The buffer assembly 30 includes a first buffer member 31, a second buffer member 32, a third buffer member 33, and a fourth buffer member 34 that are each strip-shaped. The first buffer member 31 and the second buffer member 32 are distributed on two sides of the second central axis 242 along the second direction Y, and both the first buffer member 31 and the second buffer member 32 are disposed extending along the third direction Z. The third buffer member 33 and the fourth buffer member 34 are distributed on two sides of the first central axis 241 along the third direction Z, and both the third buffer member 33 and the fourth buffer member 34 are disposed extending along the second direction Y.

Different buffer members of the buffer assembly 30 are disposed on different edge regions of the first surface 24 of the battery cell 20. When the battery cell 20 expands, a degree of expansion of a central region of the first surface 24 of the battery cell 20 is greater than a degree of expansion of an edge region of the first surface 24. Therefore, disposing the different buffer members on the different edge regions of the first surface 24 enables reservation of a certain expansion space for the battery cell 20, thereby meeting the expansion requirement of the battery cell 20.

Furthermore, separately manufacturing the different buffer members can reduce the probability of material waste caused by repeatedly cutting buffer members due to the fact that the obtained buffer members do not meet actual requirements because of centralized fabrication of all buffer members, thereby saving materials required for fabricating the buffer members.

The technical features of the embodiments described above can be combined arbitrarily. In order to make the description concise, not all possible combinations of the technical features in the aforementioned embodiments are described. However, all the combinations of the technical features should be considered as falling within the scope described in this specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A battery, comprising:
a first battery cell comprising a first surface perpendicular to a first direction, the first surface facing another battery cell that is adjacent; and
a buffer assembly disposed on the first surface, the buffer assembly comprising a first buffer member, a second buffer member, a third buffer member, and a fourth buffer member that are each strip-shaped, wherein the first buffer member and the second buffer member are located on the two sides of a central axis of the first surface that is along a second direction, respectively, and the third buffer member and the fourth buffer member are located on the two sides of a central axis of the first surface that is along a third direction, respectively, the first direction, the second direction, and the third direction being mutually perpendicular.

2. The battery according to claim 1, wherein projections of the first buffer member, the second buffer member, the third buffer member, and the fourth buffer member along the first direction are completely staggered.

3. The battery according to claim 2, wherein the first buffer member, the second buffer member, the third buffer member, and the fourth buffer member are arranged spaced apart from each other.

4. The battery according to any one of claims 1 to 3, wherein the first battery cell comprises an electrode assembly, the electrode assembly comprising a tab extending out along the third direction, wherein the first buffer member and the second buffer member are disposed parallel to the third direction, and the first buffer member and the second buffer member are symmetrically distributed relative to the central axis of the first surface that is along the third direction.

5. The battery according to any one of claims 1 to 4, wherein the first battery cell comprises an electrode assembly, the electrode assembly comprising a tab extending out along the third direction, wherein the third buffer member and the fourth buffer member are disposed parallel to the second direction, and the third buffer member and the fourth buffer member are symmetrically distributed relative to the central axis of the first surface that is along the second direction.

6. The battery according to any one of claims 1 to 5, wherein the battery comprises a carrier plate, and the first battery cell comprises a second surface, the second surface being adjacent to the first surface, the second surface being connected to the carrier plate by means of adhesion, the carrier plate being perpendicular to the third direction, and the fourth buffer member being arranged closer to the carrier plate than the third buffer member,
wherein a maximum distance between the first buffer member and the fourth buffer member is less than a maximum distance between the first buffer member and the third buffer member.

7. The battery according to any one of claims 1 to 6, wherein the battery comprises a carrier plate, and the first battery cell comprises a second surface, the second surface being adjacent to the first surface, the second surface being connected to the carrier plate by means of adhesion, the carrier plate being perpendicular to the third direction, and the fourth buffer member being arranged closer to the carrier plate than the third buffer member, wherein a maximum distance between the second buffer member and the fourth buffer member is less than a maximum distance between the second buffer member and the third buffer member.

8. The battery according to any one of claims 6 to 7, wherein a maximum distance between the first buffer member and the third buffer member along the third direction is less than or equal to 5.5 mm.

9. The battery according to any one of claims 6 to 7, wherein a maximum distance between the second buffer member and the third buffer member along the third direction is less than or equal to 5.5 mm.

10. The battery according to any one of claims 1 to 9, wherein the first battery cell comprises an electrode assembly, the electrode assembly comprising a tab extending out along the third direction, wherein the third buffer member is arranged closer to the tab than the fourth buffer member, and an elasticity of the fourth buffer member is greater than an elasticity of the third buffer member.

11. The battery according to claim 10, wherein the electrode assembly comprises a body, the tab protruding from the body, and the fourth buffer member being opposite to at least a portion of the body along the first direction.

12. The battery according to any one of claims 1 to 11, wherein the first battery cell comprises an end cover and a case, the end cover being engaged with the case along the third direction, and the end cover being welded to the case, wherein the third buffer member is arranged closer to the end cover than the fourth buffer member, and a weld seam formed by welding the end cover and the case is completely staggered from the third buffer member.

13. The battery according to claim 12, wherein the first surface comprises a first edge, the first edge being located on a side of the first surface that is close to the end cover along the third direction, wherein the weld seam is located between the third buffer member and the first edge.

14. The battery according to any one of claims 1 to 13, wherein the first battery cell comprises an end cover and a case, the end cover being engaged with the case along the third direction, and the end cover being welded to the case, wherein the third buffer member is arranged closer to the end cover than the fourth buffer member; and the first surface comprises a first edge, the first edge being located on a side of the first surface that is close to the end cover along the third direction, wherein a maximum distance between the third buffer member and the first edge along the third direction is less than or equal to 1.5 mm.

15. The battery according to any one of claims 1 to 14, wherein the first battery cell comprises a first side surface, the first side surface being adjacent to the first surface, and the first side surface and the first surface being transitionally connected by a fillet surface, wherein the second buffer member is arranged closer to the first side surface than the first buffer member, and the second buffer member is arranged spaced apart from the fillet surface.

16. The battery according to claim 15, wherein a maximum distance between the fillet surface and the second buffer member along the second direction is less than or equal to 1.5 mm.

17. The battery according to any one of claims 1 to 16, wherein the first battery cell comprises a case and an electrode assembly, the case comprising a first case wall, with the first case wall extending perpendicular to the third direction, wherein a support member is disposed between the electrode assembly and the first case wall, the fourth buffer member is arranged closer to the first case wall than the third buffer member, and the fourth buffer member is arranged spaced apart from an outer surface of the first case wall.

18. The battery according to any one of claims 1 to 17, wherein the first battery cell comprises a case and an electrode assembly, the electrode assembly being accommodated within the case, and the case comprising a first case wall perpendicular to the third direction, wherein a maximum distance between the fourth buffer member and an outer surface of the first case wall along the third direction is less than or equal to 1.5 mm.

19. The battery according to any one of claims 4 to 18, wherein a length of the first buffer member along the second direction is a, wherein 3 mm ≤ a ≤ 10 mm.

20. The battery according to any one of claims 4 to 19, wherein a length of the second buffer member along the second direction is b, wherein 3 mm ≤ b ≤ 10 mm.

21. The battery according to any one of claims 4 to 20, wherein a length of the third buffer member along the third direction is c, wherein 3 mm ≤ c ≤ 8 mm.

22. The battery according to any one of claims 4 to 21, wherein a length of the fourth buffer member along the third direction is d, wherein 3 mm ≤ d ≤ 8 mm.

23. The battery according to any one of claims 1 to 22, wherein the first buffer member, the second buffer member, the third buffer member, and the fourth buffer member jointly enclose a closed frame.

24. An electrical apparatus, comprising the battery according to any one of claims 1 to 23, wherein the battery is configured to provide electrical energy.
